(19) Europäisches Patentamt
European Patent Office
Office européen des brevets

(11) **EP 2 028 110 A1**

(12) **EUROPEAN PATENT APPLICATION**
published in accordance with Art. 153(4) EPC

(43) Date of publication:
**25.02.2009 Bulletin 2009/09**

(51) Int Cl.:
***B65D 1/02*** *(2006.01)*

(21) Application number: **06766635.4**

(22) Date of filing: **13.06.2006**

(86) International application number:
**PCT/JP2006/311823**

(87) International publication number:
**WO 2007/144939 (21.12.2007 Gazette 2007/51)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Toyo Seikan Kaisha, Ltd. Tokyo 100-8522 (JP)**

(72) Inventors:
• **SAKAGUCHI, Toshiki**
**Yokohama-shi, Kanagawa 230-0001 (JP)**
• **ABE, Ayako**
**Yokohama-shi, Kanagawa 230-0001 (JP)**
• **YOSHIHIRO, Kenji**
**Yokohama-shi, Kanagawa 230-0001 (JP)**
• **HIROTA, Norihisa**
**Yokohama-shi, Kanagawa 240-0062 (JP)**
• **MATSUDA, Naoto**
**Yokohama-shi, Kanagawa 240-0062 (JP)**

(74) Representative: **Liebetanz, Michael**
**Isler & Pedrazzini AG**
**Gotthardstrasse 53**
**Postfach 1772**
**8027 Zürich (CH)**

(54) **RESIN WIDE-MOUTHED CONTAINER AND METHOD OF THERMAL CRYSTALLIZATION OF MOUTH PART OF RESIN CONTAINER**

(57) In a wide-mouth plastic container including a container body 2 provided with a mouth portion 3, a body portion 4 and a bottom portion 5 and a lid 6 fitted to the mouth portion 3, the body portion 4 is provided with an internal pressure variation-absorbing panel 4a and the mouth portion 3 is heat-sealed with a film material 7 to seal the opening of the container body 2, thereby securing high sealing property and heat resistance in high-temperature sterilization and improving the internal pressure variation absorbing performance of the container.

FIG. 1

## Description

BACKGROUND OF THE INVENTION

1. Field of the invention

The present invention relates to a wide-mouth plastic container which ensures high sealing property and heat resistance in high-temperature sterilization and is improved in the performance of absorbing a variation in internal pressure in the container and to a method for crystallization of the mouth portion of a plastic container, which method may be preferably utilized to obtain such a wide-mouth plastic container.

2. Description of the related art

Wide-mouth containers obtained by combining a metal cap with a glass container body with an opening (mouth for taking contents) large in diameter to easily take the content out of the container are usually used as containers preferably used to take the content such as jams out of these containers in a small amount at a time.
Recently, containers made of thermoplastic resins such as polyethylene terephthalate have come to be used in various uses as is typified by beverage PET bottles, which indicates a recent trend to the use of resinmaterials for various containers (for example, Japanese Utility Model Application Laid-Open No. 63-88912). In this situation, there is a demand for substitution of wide-mouth containers with plastic containers that are light-weight and are not easily broken.

SUMMARY OF THE INVENTION

In the meantime, the resinification of wide-mouth containers receiving foods such as jams must be on the assumption that high sealing property (oxygen barrier property) and heat resistance in high-temperature sterilization using, for example, boiling are secured.
However, a structure in which a container body is simply resinified and the resinified container body is combined with a conventional metal cap as it is has the problem that the metal cap does not follow the shrinkage of the nozzle part of the container body in high-temperature sterilization and it is therefore difficult to secure the sealing property of the container.
To deal with this, if the cap is resinified such that it has a shrinkage factor equal to that of the container body, the sealing property can be secured. However, when, besides the sealing property, the oxygen barrier property is required, the oxygen barrier property of the cap has a large influence on the entire oxygen barrier property in the case of a wide-mouth container whose body has a large opening area. Therefore, the selection of the material for the cap is limited, resulting in that it is difficult to secure oxygen barrier property. There are a few chances to secure the oxygen barrier property if a cap having a multilayer structure provided with an oxygen barrier layer and an oxygen absorbing layer is used. However, such a cap is expensive, thereby giving rise to cost problems.
Meanwhile it is considered to be effective to heat-seal the opening with a film material 7 having oxygen barrier property as measures solving these problems.
In the case of forming a container by using a crystalline thermoplastic resin such as polyethylene terephthalate, the resin of the opening of the container body is thermally crystallized in usual in order to improve the heat resistance of the container, thereby preventing deformation in high-temperature sterilization. However, when the resin of the opening is thermally crystallized, the heat resistance can be improved, but heat sealing temperature must be raised, posing the problem that the heat sealing property is deteriorated on the contrary.
Here, Japanese Utility Model Application Laid-Open No. 63-88912 discloses a wide-mouth container made of a polyethylene terephthalate resin having a structure in which the peripheral portion of the opening is made to be non-crystallized portion and also the open cylinder portion is crystallized to thermally bind an aluminum foil with the end surface of opening at lower temperatures while keeping the high strength of the open cylinder portion. In Japanese Utility Model Application Laid-Open No. 63-88912, the peripheral portion of the opening of the open cylinder portion is covered with a cylindrical shading cylinder so that the heat from a heater is prevented from being conducted directly to the peripheral portion of the opening and the open cylinder portion except for the peripheral portion of the opening of the open cylinder portion is thermally crystallized.
However, in such a method, high accuracy of positioning the shading cylinder is required, the temperature of the whole of the peripheral portion of the opening reaches its crystallization temperature with ease by heat conduction from the inside and it is therefore difficult to leave only the end surface of the opening as a non-crystallizedportion selectively.
In, for example, a beverage PET bottle, a space (head space) unfilled with any content is left in the vicinity of the mouth portion in usual, the proportion of the area occupied by the head space in the container in the case of a wide-mouth container receiving, for example, jams as its content is significantly larger than in the case of a beverage PET bottle because of a larger opening area. Therefore, internal pressure of the wide-mouth container tend to vary when the content is filled or sterilized at high temperatures. Some measures must be therefore taken to solve the problem such as the deformation of the container in association with such a reduction in internal pressure. However, studies concerning these problems are nowhere found in Japanese Utility Model Application Laid-Open No. 63-88912.

There are many problems to be solved in order to make a wide-mouth container from a resin and to put the container into practice.

The present invention has been made in view of the above situation and it is an object of the present invention to provide a wide-mouth plastic container which ensures high sealing property and heat resistance in high-temperature sterilization and is improved in the performance of absorbing a variation in internal pressure when it is used in place of the conventional wide-mouth container which has a glass container body combined with a metal cap, and to provide a method for thermal crystallization of the mouth portion of a plastic container, which method is preferably used to obtain such a wide-mouth plastic container.

A wide-mouth plastic container according to the present invention includes a container body provided with a mouth portion, a body portion and a bottom portion and a lid fitted to the mouth, at least the container body being made of a thermoplastic resin, wherein the body portion is provided with an internal pressure variation-absorbing panel and the mouth portion is heat-sealed with a film material to seal the opening of the container body with the film material.

Such a structure makes it possible to provide a wide-mouth plastic container which ensures high sealing property and heat resistance in high-temperature sterilization and is improved in the performance of absorbing a variation in internal pressure.

The wide-mouth plastic container according to the present invention may have a structure in which the lid is fitted to the mouth portion such that a clearance is formed between the lid and the film material.
According to this structure, when the pressure in the container increases, the film material in the lid is curved towards the outside of the container, whereby the increase in pressure can be absorbed.

Also, the wide-mouth plastic container according to the present invention may have a structure in which at least the film material has oxygen barrier property.
According to this structure, a wide-mouth plastic container provided with not only high sealing property but also oxygen barrier property can be provided.

Also, the wide-mouth plastic container according to the present invention may have a structure in which the upper end surface of the mouth portion is made to be a non-crystallized portion and the mouth portion which is thermally crystallized except for the upper end surface is heat-sealed with the film material.
According to this structure, the heat sealing property of the mouth portion is bettered, making it possible to more improve the sealing property of the container and to prevent peel traces from remaining on the peeled surface of the film material.

Also, the wide-mouth plastic container according to the present invention may have a structure in which a convex portion formed on the upper end surface of the mouth portion is made to be a non-crystallized portion and the mouth portion which is thermally crystallized except for the convex portion is heat-sealed with the film material.
According to this structure, the seal width of the film material can be properly adjusted such that the seal portion on the upper end surface of the mouth portion is prevented from sticking out in the direction of the diameter of the container, which ensures that not only beautiful appearance is obtained after the film material is peeled off, but also the sealing property of the container can be maintained high when the container is resealed with the lid.

Also, the wide-mouth plastic container according to the present invention may have a structure in which the lid is fitted to the mouth portion in a resealable manner.
Such a structure ensures that the container can be resealed also after the container is opened and may be preferably used as a container that stores contents for a long period of time so that container is used to take the contents out of the container in a small amount at a time.

Also, the wide-mouth plastic container according to the present invention may have a structure in which the lid is provided with a ring projection in contact with the upper end surface of the mouth portion through the film material on the inside surface of the roof plate of the lid.
Such a structure makes it possible to avoid the peeling of the film material efficiently and to prevent sterilizing water from penetrating into the upper surface of the film material even if the internal pressure in the container is increased in, for example, high-temperature sterilization.

Also, the wide-mouth plastic container according to the present invention may have a structure in which the lid is provided with a ring projection located closer to the inside of the container than the inner periphery of the mouth portion on the inside surface of the roof plate of the lid.
Such a structure enables efficient avoidance of a phenomenon that the film material is peeled from the inside of the container, making it possible to prevent contents from entering into between the upper end surface of the mouth portion and the film material.

Also, a method for crystallization of the mouth portion of a plastic container according to the present invention includes applying heat to the mouth portion in the condition that the container or a preform of the container is put upside down, the inside surface of the container or the preform of the container is supported by a jig and the upper end surface of the mouth portion is brought into contact with a pedestal, to thereby crystallize the mouth portion thermally while the part made in contact with the pedestal is selectively put into a non-crystallized state.

Such a method ensures that a plastic container can be obtained in which the strength and heat resistance of the mouth portion are improved while the heat sealing property is secured.

Also, in the method for crystallization of the mouth portion of a plastic container, a shielding plate may be disposed at a portion where the progress of thermal crystallization is intended to be limited so as to prevent direct application of the heat from a heat source.

Such a method makes it more easy to heat a part of the mouth portion.

In the method for crystallization of the mouth portion of a plastic container, the jig may have a plane surface supporting the inside surface of the container or preform of the container.

Such a method can limit the progress of the thermal crystallization of the part which is not intended to be thermally crystallized, more efficiently by the heat dissipation effect of the jig.

Also, in the method for crystallization of the mouth portion of a plastic container, the pedestal side end portion of the jig may be positioned at the boundary between the portion where the progress of thermal crystallization is intended to be limited and the portion where the progress of thermal crystallization is intended.

Such a method enable the clear formation of the boundary between the portion where the thermal crystallization has been progressed by heat treatment and the portion where the thermal crystallization has been limited, and it is therefore possible to avoid molding disorders efficiently.

Also, in the method for crystallization of the mouth portion of a plastic container, the pedestal side end portion of the shielding plate and the pedestal side end portion of the jig may be positioned on almost the same horizontal plane.

Such a method enable the clear formation of the boundary between the portion where the thermal crystallization has been progressed by heat treatment and the portion where the thermal crystallization has been limited.

According to the present invention, high sealing property and heat resistance in high-temperature sterilization can be secured and the performance of absorbing a variation in internal pressure can be improved. Also, the container can be made to have oxygen barrier property and conventional wide-mouth glass containers can be replaced with the plastic container of the present invention which is light-weight and is scarcely broken.

BRIEF DESCRIPTION OF THE DRAWINGS

FIG. 1 is a plan view showing an embodiment of a wide-mouth plastic container according to the present invention.
FIG. 2 is a sectional view along the line A-A in FIG. 1.
FIG. 3 is an enlarged sectional view of a main part showing an embodiment of a wide-mouth plastic container according to the present invention.
FIG. 4 is a plan view showing the outline of a preform used to form a container body by molding.
FIGS. 5 is explanatory views showing a non-crystallized portion to be formed on the upper surface side of a mouth portion.
FIG. 6 is an explanatory view showing a method for crystallization of the mouth portion of a plastic container according to the present invention.

EXPLANATION OF SYMBOLS

1.  Container
2.  Container body
3.  Mouth portion
3a.  Non-crystallized portion
4.  Body portion
4a.  Internal pressure variation absorbing panel
5.  Bottom portion
6.  Lid
6a.  Ring projection
6b.  Ring projection
7.  Film material

8.      Convex portion
9.      Gap
10.     Preform
11.     Jig
12.     Pedestal
13.     Support portion
14.     Shielding plate
15.     Heat source
M.      Content
S.      Head space

DESCRIPTION OF THE PREFERRED EMBODIMENTS

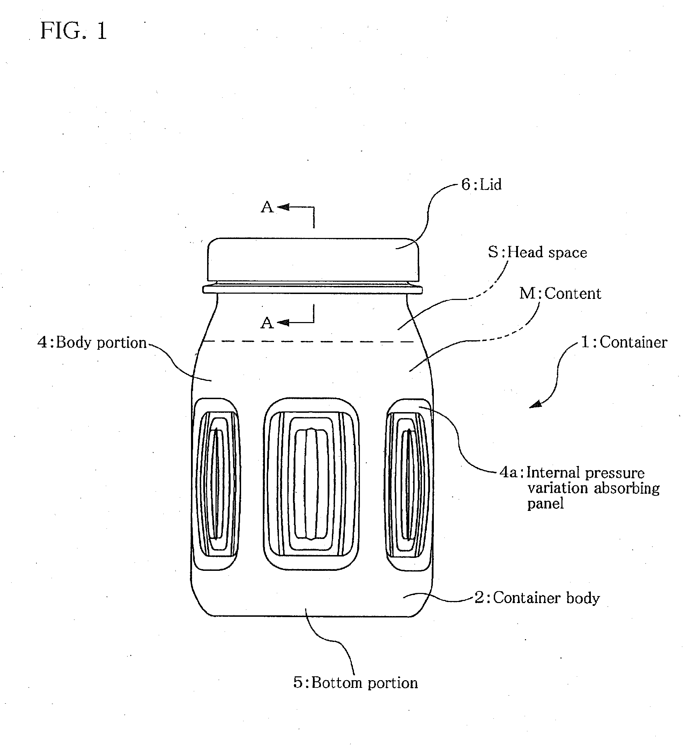

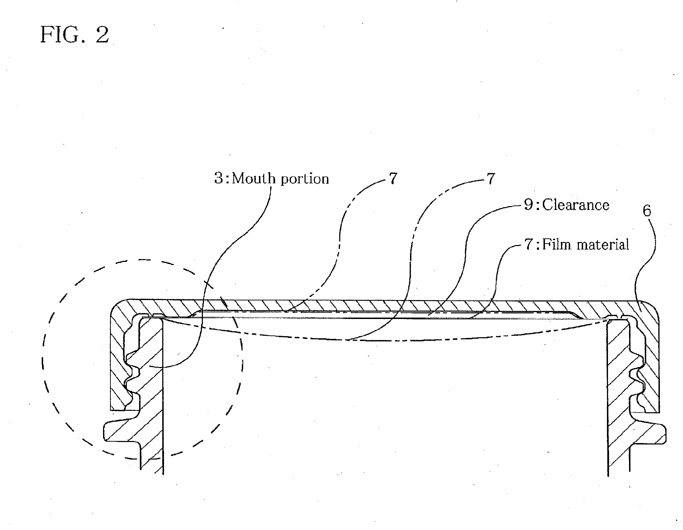

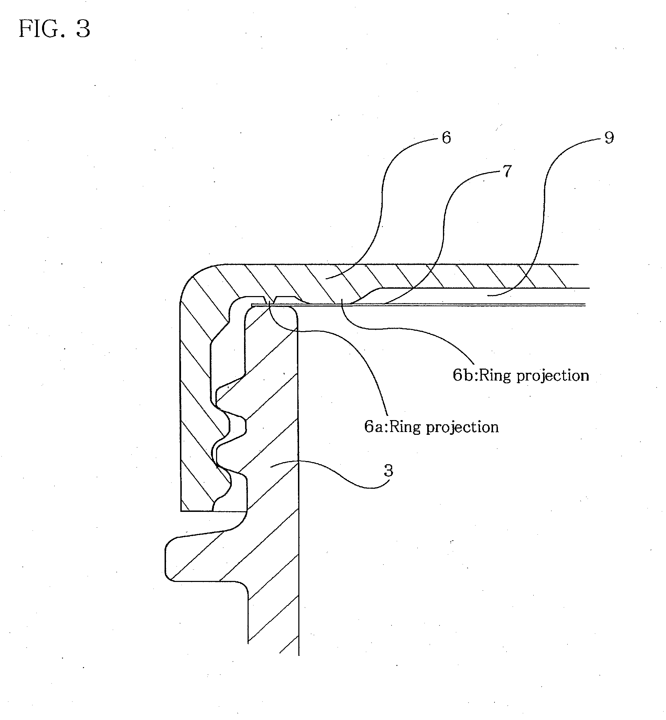

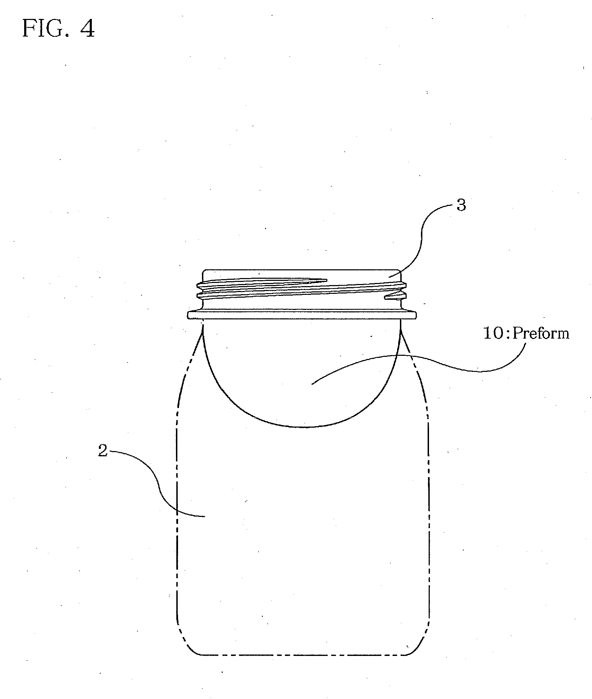

Preferred embodiments according to the present invention will be explained with reference to the drawings. Here, FIG. 1 shows an embodiment of a wide-mouth plastic container according to the present invention and is a plan view of a wide-mouth plastic container according to the present embodiment, and FIG. 2 is a sectional view along the line A-A in FIG. 1. FIG. 3 is an enlarged sectional view of a main part showing the part enclosed by the dotted line in FIG. 2.
A container 1 shown in FIG. 1 has a container form generically called a wide-mouth container and is structurally provided with a container body 2 having a mouth portion 3, a body portion 4 and a bottom portion 5 and a lid 6 to be fitted to the mouth portion 3, wherein the opening diameter of the mouth portion 3 is made larger (for example, diameter of 40 mm or more) in consideration of easily taking the contents M out of the container.
Also, the lid 6 is, as shown in the drawings, fitted to the mouth portion 3 of the container body 2 by screw engagement so as to have a structure enabling resealing after the container is opened. As the material of the lid 6, any material may be used without any particular limitation and a known metal cap that has been used for this type of wide-mouth container may be used as it is. Also, lid 6 prepared by molding a thermoplastic resin such as polypropylene or polyethylene into a predetermined shape may be used. Also, lid 6 formed of complex materials of these resins and metals or film materials may be used. As mentioned above, there is no particular limitation to the specific structure of the lid 6 and the lid 6 may have a multilayer structure including an oxygen barrier layer according to the need.
In the container 1 in this embodiment, at least the container body 2 is made of a thermoplastic resin and may be produced, for example, by drawing blow molding of a bottomed cylinder preform 10 that is produced by a known injection molding or extrusion molding (see FIG. 4).
As the thermoplastic resin constituting the container body 2, a desired resin may be used insofar as it can be made into a desired container form by drawing blow molding. Specifically, thermoplastic polyesters such as polyethylene terephthalate, polyethylene isophthalate, polybutylene terephthalate, polyethylene naphthalate, polycarbonate, polyallylate, polylactic acid or copolymer of these resins, or mixtures of these resins or mixtures obtained by blending these resins and other resins are preferable. Particularly, ethylene terephthalate based thermoplastic polyesters such as polyethylene terephthalate are preferably used. Also, an acrylonitrile resin, polypropylene, propylene/ethylene copolymer, polyethylene or the like may be used.
These resins may be blended with various additives, for example, colorants, ultraviolet absorber, mold-releasing agent, lubricant, nucleating agent, antioxidant and antistatic agent to the extent that the qualities of the molded products are not impaired.
The ethylene terephthalate based thermoplastic polyester is preferably one in which a large part (for example, 70 mol% or more) of the ester repeating units are occupied by ethylene terephthalate units and which has a glass transition temperature (Tg) range from 50 to 90°C and a melting point (Tm) range from 200 to 275°C.
As the ethylene terephthalate based thermoplastic polyester, polyethylene terephthalate (PET) is particularly superior in, for example, resistance to pressure, heat, or both: however, copolymer polyesters containing, other than an ethylene terephthalate unit, a dibasic acid such as cyclohexanedicarboxylic acid, isophthalic acid and naphthalenedicarboxylic acid or a diol such as propylene glycol, 1,4-butandiol or cyclohexane dimethanol may be used.
Also, in this embodiment, the container body 2 may be constituted of two or more thermoplastic polyester layers in addition to the case where it is constituted of a monolayer (one layer) thermoplastic polyester layer. The container body 2 may be provided with intermediate layers sealed between an inner layer and an outer layer constituted of two or more thermoplastic polyester layers. The intermediate layers may be an oxygen barrier layer and an oxygen absorbing layer. If the oxygen barrier layer and the oxygen absorbing layer are disposed in this manner, the penetration of oxygen from the outside into the container can be limited and the content M in the container can be prevented from being denatured by oxygen from the outside.
Here, as the oxygen absorbing layer, a desired material may be used insofar as it absorbs oxygen and prevents the penetration of oxygen. However, a combination of an oxidizable organic solvent and a transition metal catalyst or a combination of a gas barrier layer which is not substantially oxidized, an oxidizable organic solvent and a transition metal catalyst may be preferably used.

Also, in this embodiment, an internal pressure variation absorbing panel 4a is formed on the body portion 4 of the container body 2. The internal pressure variation absorbing panel 4a deforms gently towards the inside of the container 1 to absorb a reduction in pressure when the internal pressure of the container 1 is reduced and deforms gently towards the outside of the container 1 to absorb an increase in pressure when the internal pressure of the container 1 is increased. In this manner, the internal pressure variation absorbing panel 4a absorbs a variation in internal pressure to lighten the load applied to the inside of the container 1 in association with a variation in internal pressure. In the illustrate example, six internal pressure variation absorbing panels 4a are formed along the direction of the periphery of the body portion 4.

In the container 1 provided with the container body 2 in this embodiment, the content M can be filled and sealed with high sealing property in the following manner: after the content M is filled, the upper end surface of the mouth portion 3 is heat-sealed with the film material 7 to seal the opening and the lid 6 is fitted to the mouth portion 3, to fill and seal the content M with high sealing property. Also, even if shrinkage of the mouth portion 3 is caused in high-temperature sterilization and a clearance is formed between the mouth portion 3 and the lid 6, the sealing property of the container 1 is not impaired because the mouth portion 3 is heat-sealed with the film material 7.

Moreover, in this embodiment, when, as shown by the two-dot chain line in FIG. 2, the internal pressure in the container 1 is decreased, the film material 7 is curved towards the inside of the container to absorb a decrease in pressure whereas when the internal pressure in the container 1 is increased, the film material 7 is curved towards the outside of the container to absorb an increase in pressure to more lighten the load applied to the inside of the container 1. For this, when the lid 6 is fitted to the mouth portion 3, the gap 9 is preferably formed between the lid 6 and the film material 7.

Generally, in a wide-mouth container of this type, the content M is filled with leaving a head space S in the vicinity of the mouth portion 3. Because the mouth portion 3 has a large opening area, the proportion of the area occupied by the head space S in the container is larger that much (see FIG. 1). Also, as to a method of filling and sterilizing the content M, when the content M is filled at high temperatures, the pressure in the container is decreased after cooled. In the case of hot-water sterilization or boiling sterilization carried out by heating after the content is filled and sealed, the pressure in the container is increased during high-temperature sterilization.

Such a variation in internal pressure tends to increase in a wide-mouth container in which the proportion of a head space is larger. However, in this embodiment, the variation in internal pressure in the container can be absorbed by the internal pressure variation absorbing panel 4a formed on the body portion 4 of the container body 2 and the film material 7 with which the mouth portion 3 is heat-sealed and it is therefore efficiently avoid the deformation of the container 1 in association with the variation in internal pressure.

As the film material 7 with which the mouth portion 3 is heat-sealed to seal the container 1 in this embodiment, those having oxygen barrier property are preferable. High oxygen barrier property can be secured by combining these filmmaterials with the container 2 having high oxygen barrier property, whether the lid 6 has oxygen barrier property or not.

As the film material 7 like this, a film having a multilayer structure in which a base material layer, an intermediate layer (barrier layer) and a sealant layer are laminated in this order through adhesive layers may be used. Its specific structure may be properly selected in consideration of required tensile strength, drop impact resistance, pinhole resistance and resistance to contents and taking heat resistance into account when high-temperature sterilization such as hot-water sterilization and retort sterilization is required.

As the base material layer, a film superior in mechanical characteristics such as tensile strength, anti-impact strength and pinhole resistance is preferably used. Specifically, biaxial oriented films made of polyester based resins such as polyethylene terephthalate, polyamide based resins such as nylon and polyolefin based resins such as polypropylene may be used either singly or by laminating one or more of the films as the base material film.

Each of these base material films itself may be provided with barrier property by depositing a metal such as aluminum or an inorganic oxide such as alumina (aluminum oxide) or silica (silicon oxide) on the base material film, by coating the base material film with a barrier organic material having barrier property such as polyvinylidene chloride or polyacrylic acid, or by blending an oxygen absorbing resin including an oxidizable polymer and an oxygen absorber composed of a reducing metal compound with the base material film according to the need.

As the intermediate layer, a synthetic resin film provided with the performance to form a barrier against various gases and steam may be used. Examples of such a synthetic resin film include ethylene/vinyl alcohol copolymer films; vinylidene chloride copolymer films; crystalline polyamide films (Nylon MXD6) obtained by a polymerization condensation reaction between metaxylenediamine (MXDA) and adipic acid; acrylonitrile copolymer films; polyglycolic acid and its copolymer films; polyglycolic acid based films; clay based nanocomposite synthetic resin films; inorganic film deposited films; films coated with a barrier organic material such as polyvinylidene chloride or polyacrylic acid; and films coated with a clay based nanocomposite material using a thermosetting resin such as a phenol resin, epoxy resin or polyimide resin as a base.

In the films, an oxygen absorbing resin including an oxidizable polymer and an oxygen absorber including a reducing metal compound may be blended as desired. Also, when no transmittance is required, a metal foil (including an alloy foil) such as aluminum foil or steal foil may be used as other materials imparting barrier properties.

It is demanded of the sealant layer to have heat sealing property (it can be melted, diffused and resolidified at a temperature lower than the melting point of at least the material constituting the base material layer), heat sealing strength, heat resistance (heat sealing strength at high temperatures), resistance to contents and sanitary performance. Examples of the synthetic resin materials having heat sealing property applicable to such a sealant layer include polyolefin based resins such as low-density polyethylene, linear low-density polyethylene (Ziegler based (multisite catalyst), metallocene based (single-site catalyst)), ethylene/$\alpha$-olefin copolymers, olefin copolymers graft-modified by ethylene based unsaturated carboxylic acid or anhydride thereof, medium-density polyethylene, high-density polyethylene, polypropylene, propylene/ethylene copolymers, polybutene-1, polymethylpentene, ethylene/vinyl acetate copolymers, ethylene/ acrylic acid copolymers, ethylene/methacrylic acid copolymers, ionic crosslinking olefin copolymers (ionomers) obtained by introducing a metal ion group into a part of an ethylene/methacrylic acid copolymers and ethylene/tetracyclododecene copolymers (cyclic olefin copolymer); aromatic vinyl copolymers such as polystyrene and styrene/butadiene copolymers; vinyl halide resins such as polyvinyl chloride and polyvinylidene chloride; acrylonitrile copolymers such as acrylonitrile/ styrene copolymers and acrylonitrile/butadiene/styrene copolymers; polylactic acid based resins (including a polymeso-lactide compound based); and polyester based resins having a relatively low-melting point such as polybutylene terephthalate. These resins may be used singly or two or more of these resins may be blended upon use according to the need.

Particularly, it is preferable to use copolymer polyesters obtained by modifying polyethylene terephthalate or polybutylene terephthalate by a polyvalent carboxylic acid component such as isophthalic acid or adipic acid and a polyhydric alcohol component such as 1,4-butanediol or 1,4-cyclohexanedimethanol as the synthetic resin materials used for the sealant layer in this embodiment. Additionally, the sealant layer may be provided with easily peeling properties by blending an incompatible synthetic resin material such as polyethylene or polypropylene.

Examples of the material forming the adhesive layer that binds each of these layers include polyurethane based resins such as a polyether based polyurethane resin and polyester based polyurethane resin, polyester based resins, epoxy based resins, acryl based resins and olefin based resins into which a polar group is introduced.

When the film material 7 having a multilayer structure like this is obtained, the synthetic resin film forming each layer may be obtained by using a usual method such as a casting method, T-die method, calendering method or inflation method. Then, the film material 7 may be obtained by a usual method such as a dry lamination method using a pre-molded film or a sandwich lamination method, laminate layer coating method or melt-co-extrusion method using a molten resin. At this time, in order to improve the adhesiveness of each of the base material layer, intermediate layer and sealant layer, the surface of each layer which surface is in contact with the adhesive layer may be subjected to surface reforming treatments such as corona discharge treatment, flame treatment, ultraviolet treatment, ozone treatment, primer coating treatment (coated with an alkyl titanate, polyethylene imine, silane coupling agent, isocyanate based compound, polyurethane based compound or the like).

Also, in this embodiment, it is preferable to form a projection 6a to be in contact with the upper end surface of the mouth portion 3 through the film material 7, in the form of a ring along the upper end surface of the mouth portion 3 on the inside surface of the roof plate of the lid 6 such that the film material 7 is pressed against the upper end surface of the mouth portion 3 by this ring projection 6a.

Such a structure makes it possible to efficiently avoid the peeling of the film material 7 from the upper end surface of the mouth portion 3 even if the film material 7 is lifted upward along with a rise in internal pressure in the container in for example, high-temperature sterilization, whereby the sealing property can be maintained. Moreover, if sterilizing water used in the high-temperature sterilization penetrates into the gap between the lid 6 and the film material 7 and the container in which the sterilizing water is left unremoved is distributed as it is, there is a fear of misunderstanding that the container is a defective because the sterilizing water in the container is seen as if the content M had leaked. However, when the ring projection 6a is made to be in contact with the upper end surface of themouthportion 3 through the filmmaterial 7, the penetration of the sterilizing water into the upper surface of the film material 7 can be prevented.

Therefore, in this embodiment in which the peeling of the film material 7 is prevented by the lid 6 fitted to the mouth portion 3, it is unnecessary to decide the seal strength of the film material 7 in consideration of peeling in the high-temperature sterilization or when the container is distributed after the content M is filled and sealed in the container. The seal strength of the film material 7 may be properly designed in a range, for example, from 5 to 25 N/15 mm preferentially taking easy peeling properties into account. When, particularly, the seal strength is designed to be 15 N/ 15 mm or less, the easy peeling properties of the film material 7 can be attained.

In the case of adopting retort sterilization as the high-temperature sterilization, the relevant laws provide that the seal strength must be 23 N/15 mm or more and it is therefore possible to select the seal strength within the lawful range.

Also, when even a part of the film material 7 is peeled or there is an unsealed portion between the film material 7 and the mouth portion 3 on the inside periphery of the upper end surface of the mouth portion 3, the content M enters into that portion and there is a fear of giving a disagreeable feel to purchasers when the container 1 is opened. Therefore, a ring projection 6b may be formed on the inside surface of the roof plate of the lid 6, the ring projection 6b being disposed on the inner peripheral side than the ring projection 6a that is in contact with the upper end surface of the mouth portion 3 and in the vicinity of an inner position of the container than the inside periphery of the mouth portion 3 when the lid 6 is fitted to the mouth portion 3, so as to prevent the film material 7 frombeing lifted over the upper end surface of the mouth portion 3.

This structure can prevent the content M from penetrating into between the upper end surface of the mouth portion 3 and the film material 7 because the condition that the film material 7 is in close contact with the upper end surface of the mouth portion 3 is maintained.

Also, in this embodiment, the resin forming the mouth portion 3 may be thermally crystallized to prevent the mouth portion 3 of the container body 2 from being deformed by heat treatment such as high-temperature sterilization carried out after the content M is filled and sealed. If the resin forming the mouth portion 3 is thermally crystallized, for example, heat sealing temperature must be raised when the mouth portion 3 is heat-sealed with the film material 7, causing deteriorated heat sealing property. For this, it is preferable to thermally crystallize the mouth portion 3 while the upper surface side of the mouth portion 3, namely, the heat seal portion corresponding to the film material 7 is made to be a non-crystallized portion selectively.

This ensures that the heat sealing property of the mouth 3 is bettered and it is therefore possible to more improve the sealing property of the container 1 and to design in such a manner as to prevent peel traces from remaining on the peeled surface of the film material 7.

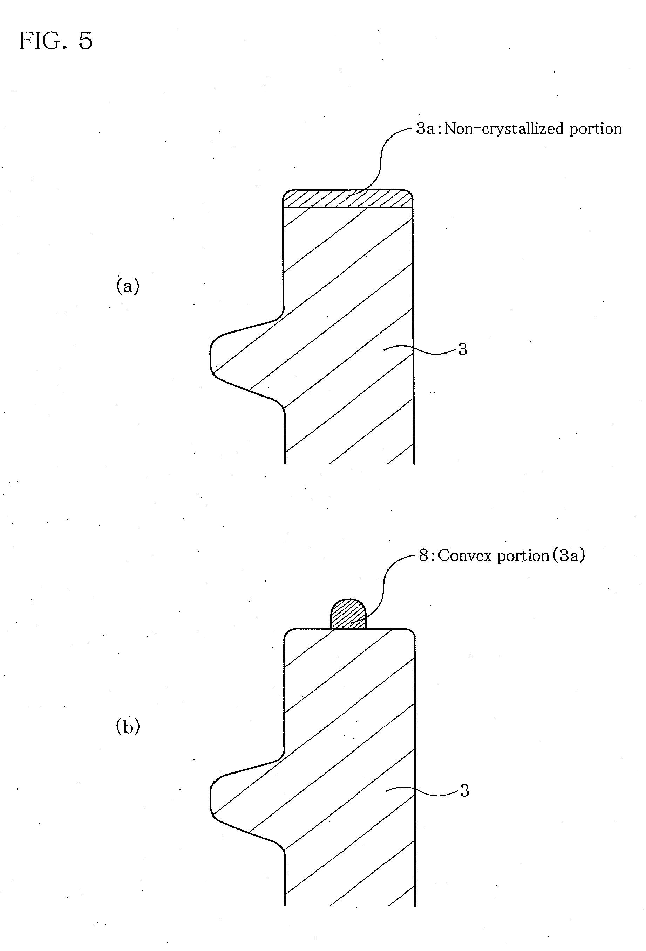

When the heat seal portion of the mouth portion 3 is made to be selectively a non-crystallized portion, the entire surface of the upper end surface of the mouth portion 3 may be made to be a non-crystallized portion 3a as shown in FIG. 5(a). However, as shown in FIG. 5(b), it is particularly preferable to form a convex portion 8 on the upper end surface of the mouth portion 3 to secure heat sealing property by using the convex portion 8 as the non-crystallized portion 3a. This ensures that the width of the convex portion 8 which is to be the non-crystallized portion 3a may be optionally set to thereby regulate the width of a portion sealed with the film material, which can prevent the occurrence of the phenomenon that the seal portion on the upper end surface of the mouth portion 3 is melted and deformed to protrude in the direction of the diameter of the container, whereby not only the appearance of the seal portion after the f ilmmaterial 7 is peeled of f is improved but also high sealing property can be maintained when the container is resealed with the lid 6. Here, the seal width is preferably designed to be in a range from 0.5 to 5 mm though it depends on the thickness of the mouth portion 3.

In order to thermally crystallize the mouth portion 3 of the container body 2 except for the heat seal portion while the heat seal portion of the mouth portion 3 of the container body 2 is selectively to be non-crystallized portion 3a, it is only required, for example, that the mouth portion 3 is subjected to thermal crystallization treatment in the following manner.

In the following example, a preform 10 is subjected to thermal crystallization treatment: however, the container body 2 after it is made into a desired container form may be subjected to the thermal crystallization treatment. In the case of carrying out thermal crystallization on any of the preform 10 and container body 2, each treatment may be carried out according to a similar process.

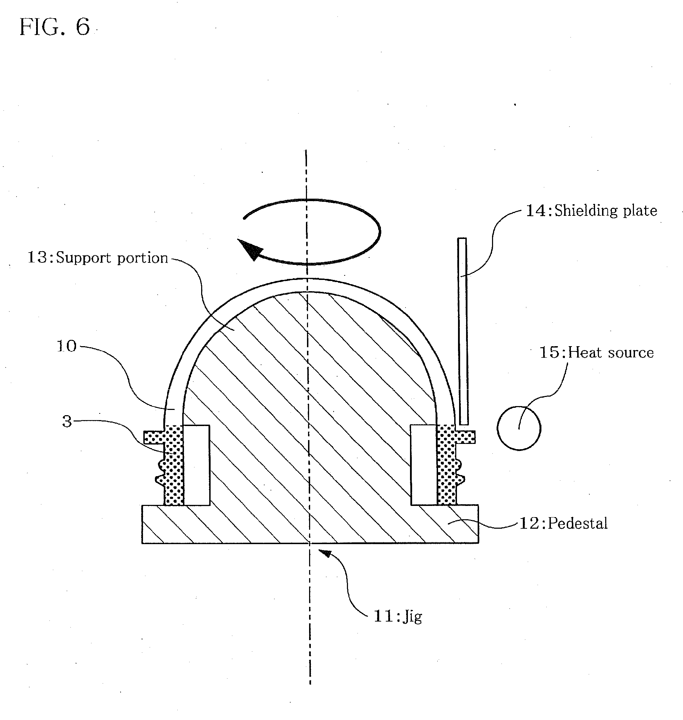

In order to thermally crystallize the mouth portion 3 of the container body 2 in this embodiment, first, the preform 10 is put upside down, the inside surface of the preform 10 is supported by a support portion 13 of a jig 11 and the preform 10 is placed on a pedestal 12 in the condition that the upper end surface of the mouth portion 3 is brought into contact with the pedestal 12 as shown in FIG. 6.

At this time, the jig 11 may be made of a metal material, such as stainless, aluminum or steel, having high heat conductivity. Also, in the illustrated example, the pedestal 12 is integrated with the jig 11. However, the pedestal 12 is constituted separately from the jig 11 according to the need.

Next, heat is applied to the mouth portion 3 of the preform 10 from a heat source 15 to heat the preform 10. The position where the heat source 15 is installed, specifically, the direction (direction to obtain a maximum calorie) in which heat is applied from the heat source 15 and the distance from the heat source 15 to the mouth portion 3 is decided in consideration of the range (angle) to which heat is emitted, calories (distribution of the angles of calories) and the shape and size of the preform 10 (mouth portion 3).

Also, when the mouth portion 3 of the preform 10 is heated, it can be heated with rotating the preform 10 together with the jig 11 with respect to the fixed heat source 15 or the like, for example, in the rotating direction shown by the arrow in FIG. 6.

As the heat source 15, for example, a carbon dioxide gas laser, near-infrared heater, far-infrared heater and warm-air heater may be used.

If a carbon dioxide gas laser is used as the heat source 15, the mouth portion 3 is partially heated with ease by regulating the spot diameter or power of the laser. When a heater, such as an infrared heater or warm air heater, which has a relative difficulty in controlling a heating range (angle), is used, a shielding plate 14 is disposed as shown in the figure to thereby make it possible to prevent direct application of the heat from the heat source 15 to the part (part drawn when molding) where the progress of thermal crystallization is expected to be limited.

In this embodiment, the mouth portion 3 is heated in the situation where the upper surface side of the mouth portion 3 is made to be in contact with the pedestal 12. At this time, the heat conducted to the upper surface side of the mouth portion 3 is dissipated from the contact surface of the pedestal 12 made of a metal material having high heat conductivity.

Therefore, the temperature of the resin of the upper surface side of the mouth portion 3 is limited to a temperature at which thermal crystallization does not progress to make thermally crystallize the mouth portion 3 selectively while the upper end surface of the mouth portion 3 is made to be a non-crystallized portion 3a by appropriately controlling the calories applied to the mouth portion 3 from the heat source 15 and the dissipation calories from the pedestal 12.

Also, in this embodiment, the inside surface of the preform 10 is supported by the jig 11 to prevent a load due to the self-weight of the preform 10 from being applied to the mouth portion 3 softened by heating or its vicinity, whereby the mouth portion 3 and the like can be prevented from being deformed when heated. Moreover, in the example illustrated, the support portion 13 of the jig 11 is formed into the same plane form as the inside surface of the preform 10 to support the inside surface of the preform 10 by the plane so as to dissipate heat from the contact surface of the support 13 made of a metal material having good heat conductivity even if the shielding plate 14 fails to shield the heat from the heat source 15 or the heat is conducted to the portion where the progress of thermal crystallization is intended to be limited, by the heat conduction of the resin itself.

Here, in FIG. 6, the portion (mouth portion 3) that is thermally crystallized is indicated by dots and hatching showing the section of other portion, namely, the portion drawn when the container body 2 is molded is omitted.

Therefore, the support portion 13 formed in the jig 11 is preferably disposed in such a manner as to position the end portion of the pedestal 12 side of the support portion 13 at the boundary between the portion where the progress of thermal crystallization is intended to be limited and the mouth portion 3 where the progress of thermal crystallization is intended. Thus, the boundary between the portion where the thermal crystallization is limited and the thermal crystallization is progressed can be more clearly formed.

At this time, a shielding plate 14 as mentioned above is disposed and the position of the shielding plate 14 is appropriately controlled such that the boundary between the end portion of the pedestal 12 side of the shielding plate and the end portion of the pedestal 12 side of the support part 13 are on almost the same plane, whereby the boundary can be more clearly formed.

When the preform 10 is subjected to drawing processing, the boundary between the portion that is thermally crystallized and the portion that is limited in thermal crystallization is not clearly formed. If the portion to be drawn has been partially thermally crystallized, the softening point of the boundary portion is locally raised by the thermal crystallization and there is therefore a fear that the drawing processing is hindered. Also, if a portion whose color is changed to white by thermal crystallization is intermingled in a part that is oriented and crystallized by drawing and thereby improved in transparency, the thermally crystallized portions are observed as, for example, white lines, which produces an adverse influence on the outward appearance of the container 1.

For this, if the boundary between the thermally crystallized portion and the portion limited in thermal crystallization is formed clearly, it is possible to avoid such a defect caused by drawing processing efficiently.

Here, in the example illustrated, the support portion 13 is formed in the same sectional shape as the inside surface of the preform 10. However, the support portion 13 may have such a form that its end portion on the pedestal 12 side is positioned at the boundary between the portion where the progress of thermal crystallization is intended to be limited and the mouth portion 3 where the progress of thermal crystallization is intended and at least a portion around the boundary is supported by a plane.

When the mouth portion 3 is crystallized in this manner, the jig 11 may be provided with a temperature control function. If the jig 11 is provided with a temperature control function, the contact surface of the upper surface side of the mouth portion 3 with the pedestal 12 and the inside surface of the preform 10 supported by the support portion 13 can be maintained at temperatures at which thermal crystallization is not positively progressed. The temperature control function may be provided, for instance, by forming a radiation fin in the jig 11 or by circulating cooling water inside of the jig 11.

In this embodiment, the degree of crystallization of the heat-seal portion on the upper end surface side of the mouth portion 3 is appropriately controlled within a range in which the heat sealing property is not impaired. Specifically, the degree of crystallization is preferably 20% or less and more preferably 10% or less.

Here, the degree of crystallization of the resin of the mouth portion 3 can be calculated from the following formula (1) according to, for example, a density method.

$$Xcv = \rho c(\rho - \rho a)/\rho(\rho c - \rho a) \qquad (1)$$

where:

Xcv: Degree of crystallization of a measured resin sample [%]
$\rho$: Density of a measured resin sample [g/cm$^3$]
$\rho a$: Density of a complete amorphous resin [g/cm$^3$]
$\rho c$: Density of a complete crystal resin [g/cm$^3$]

In the case of a polyester based resin mainly containing polyethylene terephthalate, the following values are adopted as $\rho a$ and $\rho c$; $\rho a$ = 1.335 and $\rho c$ =1.455. Also, the density of a microregion of the resin forming the non-crystallized portion 3a of the mouth portion 3 is calculated from the following equation (2) by using a laser Raman spectroscope.

$$\rho = (\Delta v_{1/2} - k1)/k2 \qquad (2)$$

where:

$\Delta v_{1/2}$ : Half value width of a peak that appears at a wavelength of 1730 cm$^{-1}$ on a laser Raman spectroscopic spectrum [cm$^{-1}$]
k1: Section found from a calibration curve in a graph in which the ordinate is the half value width and the abscissa is the density
k2: Gradient found from a calibration curve in a graph in which the ordinate is the half value width and the abscissa is the density

Industrial applicability

As explained above, the present invention can provide a wide-mouth plastic container that can be substituted for the conventional wide-mouth glass container.

**Claims**

1. A wide-mouth plastic container comprising a container body provided with a mouth portion, a body portion and a bottom portion and a lid fitted to said mouth portion, at least said container body being made of a thermoplastic resin, wherein the body portion is provided with an internal pressure variation-absorbing panel; and
said mouth portion is heat-sealed with a film material to seal the opening of said container body with said filmmaterial.

2. A wide-mouth plastic container according to Claim 1,
wherein said lid is fitted to said mouth portion such that a clearance is formed between the lid and said film material.

3. A wide-mouth plastic container according to any one of Claims 1 and 2,
wherein at least said film material has oxygen barrier property.

4. A wide-mouth plastic container according to any one of Claims 1 to 3,
wherein the upper end surface of said mouth portion is made to be a non-crystallized portion and said mouth portion which is thermally crystallized except for said upper end surface is heat-sealed with said film material.

5. A wide-mouth plastic container according to any one of Claims 1 to 3,
wherein a convex portion formed on the upper end surface of said mouth portion is made to be a non-crystallized portion and said mouth portion which is thermally crystallized except for said convex portion is heat-sealed with said film material.

6. A wide-mouth plastic container according to any one of Claims 1 to 5,
wherein said lid is fitted to said mouth portion in such a manner as to reseal the container.

7. A wide-mouth plastic container according to any one of Claims 1 to 6,
wherein said lid is provided with a ring projection in contact with the upper end surface of said mouth portion through said film material on the inside surface of the roof plate of the lid.

8. A wide-mouth plastic container according to any one of Claims 1 to 7,
wherein said lid is provided with a ring projection located closer to the inside of the container than the inner periphery of said mouth portion on the inside surface of the roof plate of the lid.

9. A method for crystallization of the mouth portion of a plastic container, the method comprising:

applying heat to said mouth portion in the condition that said container or a preform of said container is put upside down, the inside surface of said container or the preform of said container is supported by a jig and the upper end surface of said mouth portion is brought into contact with a pedestal, to thereby crystallize the mouth portion thermally while the part made in contact with the pedestal is selectively put into a non-crystallized state.

10. A method for crystallization of the mouth portion of a plastic container according to Claim 9,
wherein a shielding plate is disposed at a portion where the progress of thermal crystallization is intended to be limited so as to prevent direct application of the heat from a heat source.

11. A method for crystallization of the mouth portion of a plastic container according to any one of Claims 9 and 10,
wherein the jig has a plane surface supporting the inside surface of said container or preform of said container.

12. A method for crystallization of the mouth portion of a plastic container according to Claim 11,
wherein the pedestal side end portion of said jig may be positioned at the boundary between the portion where the progress of thermal crystallization is intended to be limited and the portion where the progress of thermal crystallization is intended.

13. A method for crystallization of the mouth portion of a plastic container according to Claim 12,
wherein the pedestal side end portion of said shielding plate and the pedestal side end portion of the jig is positioned on almost the same plane.

FIG. 1

## FIG. 2

3:Mouth portion   7   7
9:Clearance   6
7:Film material

FIG. 3

6b:Ring projection

6a:Ring projection

FIG. 4

FIG. 5

(a)

3a : Non-crystallized portion

3

(b)

8 : Convex portion (3a)

3

FIG. 6

13:Support portion

14:Shielding plate

10

15:Heat source

3

12:Pedestal

11:Jig

| **INTERNATIONAL SEARCH REPORT** | International application No. |
|---|---|
| | PCT/JP2006/311823 |

**A. CLASSIFICATION OF SUBJECT MATTER**
*B65D1/02*(2006.01)i

According to International Patent Classification (IPC) or to both national classification and IPC

**B. FIELDS SEARCHED**

Minimum documentation searched (classification system followed by classification symbols)
B65D1/02

Documentation searched other than minimum documentation to the extent that such documents are included in the fields searched
Jitsuyo Shinan Koho       1922-1996    Jitsuyo Shinan Toroku Koho    1996-2006
Kokai Jitsuyo Shinan Koho   1971-2006    Toroku Jitsuyo Shinan Koho    1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 08-198230 A  (Toppan Printing Co., Ltd.), 06 August, 1996 (06.08.96), Full text; all drawings (Family: none) | 1-8 |
| Y | Microfilm of the specification and drawings annexed to the request of Japanese Utility Model Application No. 183280/1986(Laid-open No. 088912/1988) (Yoshino Kogyosho Co., Ltd.), 09 June, 1988 (09.06.88), Full text; all drawings (Family: none) | 1-8 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 September, 2006 (11.09.06) | 19 September, 2006 (19.09.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63088912 A